# EUROPEAN PATENT SPECIFICATION

(11) **EP 1 444 764 B1**
(45) Date of publication and mention of the grant of the patent: **10.01.2007**
(21) Application number: 01274713.5
(22) Date of filing: 15.11.2001
(51) Int. Cl.: H02J 7/00, H01R 13/24

(54) **CHARGER FOR MOBILE TELEPHONE**
LADEGERÄT FÜR EIN MOBILTELEFON
CHARGEUR POUR TELEPHONE MOBILE

(43) Date of publication of application: 11.08.2004
(73) Proprietor: Sin, Min Kyiu, Seoul 135-080 (KR)
(72) Inventor: Sin, Min Kyiu, Seoul 135-080 (KR)
(74) Representative: Kirschner, Klaus Dieter
(86) International application number: PCT/KR2001/001950
(87) International publication number: WO 2003/043161

(56) References cited:
- GB-A- 2 260 040
- JP-A- 10 136 575
- KR-Y1- 236 385
- US-A- 5 039 929
- US-A- 5 256 954
- US-A- 5 287 052
- US-A- 6 033 233
- US-A- 6 049 192
- PATENT ABSTRACTS OF JAPAN vol. 015, no. 110 (E-1046), 15 March 1991 (1991-03-15) & JP 03 003618 A (SHINKO ELECTRIC CO LTD), 9 January 1991 (1991-01-09)

## Description

### TECHNICAL FIELD

The present invention relates to a charger for mobile phone, and more specifically to a charger for mobile phone capable of charging all mobile phones or batteries regardless of manufacturers and models thereof.

### BACKGROUND ART

Nowadays, the market of the personal mobile communication area is being expanded and thus competition in the area of the mobile phone is heightening more and more. Accordingly, the number of manufactures manufacturing a mobile phone is increasing. The manufacturers put on the market more miniaturized and diversified products in order to improve functionality of terminals and correspond to users' tastes.

Therefore, as the model of the mobile phone is diversified, the shape and the structure of a charger for charging it should be diversified and thus the manufacturers should supply a charger peculiar to each new model, so that the manufacturing cost is increased. Further, the user suffers from inconvenience that his own charger has to be carried in his travel or long business trip. Furthermore, when new terminals are purchased, the resource loss and the environmental pollution due to chargers to be disused become more serious.

Accordingly, in this area, development of a general purpose charger capable of charging all types of mobile phones or batteries regardless of models of the mobile terminal has been required.

US 5 256 954 shows a battery pack charging device including a housing with a base plate; a first upright wall which extends upwardly from the base plate and a second upright wall which similarly extends upwardly from the base plate and which is disposed opposite to the first upright wall. The first and second upright walls and the base plate define a receiving space to receive a battery pack. A movable wall assembly is provided in the receiving space adjacent to the first upright wall. The movable wall assembly includes a positioning wall member which faces the second upright wall and which is spaced from the second upright wall. The positioning wall member is movable towards or away from the first upright wall so as to vary the space between the positioning wall member and the second upright wall in order to correspond with the width of the battery pack. A frame of a movable electrical contact assembly is mounted on at least one of the second upright wall and the base plate. An elongated carriage is movably mounted along the frame. A pair of terminal seats are movably mounted on the carriage and have a respective electrical contact provided thereon. The terminal seats are movable along the carriage, and the carriage is movable along the frame so as to align the electrical contacts with corresponding contact terminals of the battery pack.

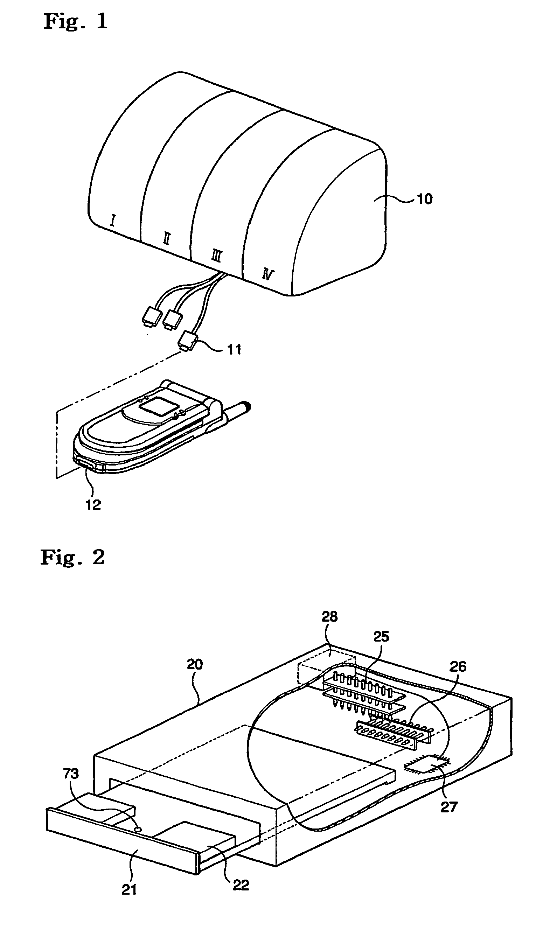

Fig. 1 shows a charger 10 for vending machine that is currently used in convenience stores. In order to use this charger, a user should find out a connector 11 corresponding to the manufacturer and model of his mobile phone and connect it to his terminal 12.

At present, the charger shown in Fig. 1 provides much convenience for users, but this apparatus has inconvenience in that the user should find out a connector corresponding to the manufacturer and model of his mobile phone and then connect it to his terminal. Further, since the apparatus cannot charge the terminal without the connector corresponding to its model, every time a new model is put on the market, a connector corresponding to the new model should be provided for service. Furthermore, since the apparatus has to include connectors corresponding to models of all manufacturers that have ever been put on the market, its volume should be great Accordingly, the conventional apparatus has a problem that it is not efficient for space or production cost.

Therefore, in order to solve the above problems, an object of the present invention is to provide as a general purpose charger a charger for mobile phone capable of automatically identifying various types of batteries and charging them.

Another object of the present invention is to provide a general purpose charger having a small volume, which can be used for the domestic purpose as well as for the public purpose.

### DISCLOUSRE OF INVENTION

In order to accomplish the above objects, the present invention provides a charger for mobile phone, comprising: a housing 20; a battery mounting unit 21 for allowing a battery 30 of the mobile phone to be mounted into the housing 20; a battery fixing unit 22 provided in the battery mounting unit 21, for locating the battery 30 at the center of the battery mounting unit 21; a battery sensing unit 73 provided in the battery mounting unit 21, for sensing that the battery 30 is mounted on the battery mounting unit 21; two charging terminal units 25, 26 in horizontal and vertical directions including a plurality of terminals 48, 38 coming in contact with metal terminals 31, 32 of the battery 30 so as to obtain a battery charging information; limit switch units 37, 47 provided in the two charging terminal units 25, 26, for adjusting movement of the battery mounting unit in accordance with a size of the battery 30 to be mounted on the battery mounting unit so as to accurately bring the charging terminal units 25, 26 into contact with the metal terminals 31, 32 of the battery; a control unit 28 connected to the charging terminal units, for controlling contact of the metal terminals 31, 32 of the battery with the charging terminal units 25, 26 and searching a charging information; and a charging circuit unit 27 connected to the control unit 28, for supplying the charging terminal units 25, 26 with a voltage using the charging information searched by the control unit 28 to charge the battery 30.

In the present invention, the control unit 28 first brings the horizontal charging terminal unit 26 of the two charging terminal units into contact with the battery to search the charging information, and when the charging information is not obtained, the control unit 28 separates the horizontal charging terminal unit 26 from the battery and then, in turn, brings the vertical charging terminal unit 25 of the two charging terminal units into contact with the battery to search the charging information.

Also, in the present invention, the charging terminal units include a terminal portion and a terminal protecting portion, and the terminals have a pin shape.

### BRIEF DESCRIPTION OF DRAWINGS

The above and other objects, advantages and features of the present invention will become apparent from the following description of preferred embodiments given in conjunction with the accompanying drawings, in which:
Fig. 1 is a simplified perspective view of a conventional charger using a connector;
Fig. 2 is a perspective view of a charger for mobile phone according to the present invention;
Fig. 3a and Fig. 3b are views illustrating a general structure of battery, respectively;
Fig. 4a and Fig. 4b are views illustrating a state that the charging terminal unit and the metal terminals of battery are in contact with each other in the charger according to the present invention, respectively;
Fig. 5 is a view illustrating a structure of an individual terminal of the charging terminal unit according to the present invention;
Fig. 6 is a view illustrating a structure of the charging terminal unit according to the present invention;
Fig. 7 is a plan view illustrating a structure of the battery mounting unit according to the present invention;
Fig. 8 is a flowchart explaining a procedure in which the battery is mounted in the charger for mobile phone according to the present invention; and
Fig. 9 is a circuit diagram of the charging circuit according to the present invention.

### BEST MODE FOR CARRYING OUT THE INVENTION

Now, preferred embodiments according to the present invention will be described in detail with reference to the appended drawings.

Fig. 2 is a perspective view of a charger according to the present invention and shows a state that a battery mounting unit is opened. As shown in Fig. 2, this charger comprises the battery mounting unit 21, a battery fixing unit 22, two charging terminal units 25, 26, a control unit 28 and a housing 20 for receiving them.

Preferably, the control unit 28 comprises a micro chip, and is connected to the two charging terminal units 25, 26 to control contact of the charging terminal units with the metal terminals of the battery and to search information required for the charging.

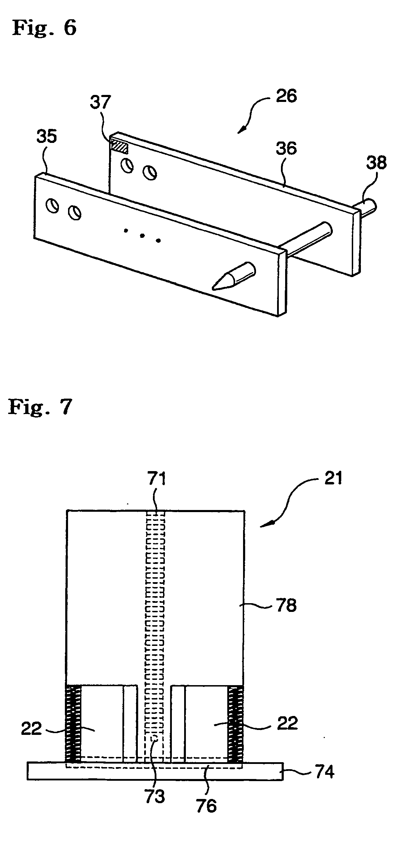

Fig. 7 is a detailed view of the battery mounting unit 21. As shown in the drawing, the battery mounting unit 21 comprises a front portion 74, a battery carrying portion 78 and a connecting portion 76, and the connecting portion 76 has a built-in elastic body to adjust movement of the battery carrying portion 78 correspondingly to a size of the battery to be mounted. The battery fixing unit 22 is provided on both sides of the battery mounting unit 21, and has an elastic characteristic to serve for fixing the battery at the center of the battery mounting unit 21.

A battery sensing unit 73 positioned in the battery carrying unit 78 of the battery mounting unit 21 senses that the battery is mounted. When the battery sensing unit 73 becomes on, that is, when the battery is mounted, the control unit 28 starts operations required for charging the battery. However, if the battery mounting unit 21 is opened and the signal value of the battery sensing unit 73 is not varied, the battery mounting unit 21 is closed into the charger and other charging operations are not started.

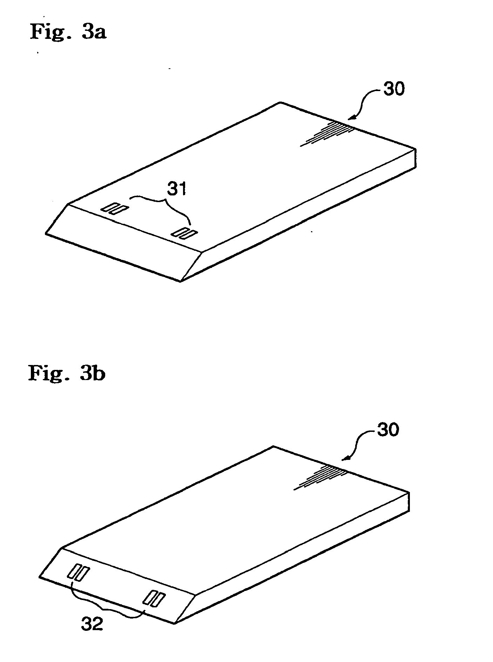

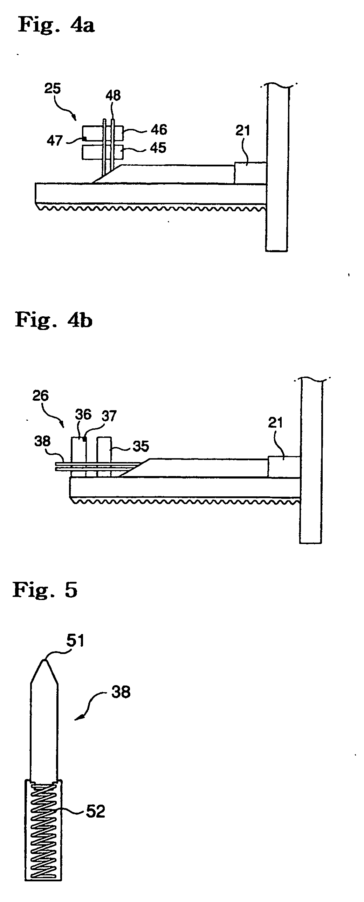

Fig. 3 shows two types of metal terminals of a general battery 30. As shown in Fig. 4, the charging terminal units 25, 26 have a plurality of terminals 38, 48 for coming in contact with the metal terminals of the battery 30 correspondingly to their types, and preferably in the present invention, include a horizontal charging terminal unit 26 and a vertical charging terminal unit 25.

By bring the plurality of charging terminals 38, 48 of the charging terminal units 25, 26 into contact with the corresponding metal terminals 31, 32 of the battery, the information for charging the battery can be obtained.

Referring to Fig. 4 again, Fig. 4b shows a state the horizontal charging terminal unit 26 is in contact with the terminal 32 of the battery 30. The horizontal charging terminal unit 26, as shown in Fig. 6 in detail, comprises a terminal fixing portion 36 for fixing the plurality of terminals 38 with a pin shape and a terminal protecting portion 35. The terminal fixing portion 36 is provided with a limit switch 37 for controlling movement of the battery carrying portion 78 correspondingly to the size of the battery 30 to be mounted on the battery mounting unit 21. The terminal protecting portion 35 performs a function of protecting safely the pin-shaped terminals 38 to prevent bending of the pins. It is preferable that each pitch of the plurality of terminals 38 is smaller than minimum width of the metal terminals of the battery to be mounted. If each pitch of the terminals 38 is greater than the minimum width of the metal terminals of the battery, any metal terminal of the battery may not come in contact with the terminals of the charging terminal units and as a result, the control unit 28 may not search the accurate charging information for the battery.

As shown in Fig. 4, the limit switch 37 senses the size of the battery to be mounted and controls positions for contact of the charging terminals unit 26 and the battery 30.

Fig. 4a shows a state that the vertical charging terminal unit 25 is in contact with the terminals 31 of the battery 30 and the basic construction thereof is the same as that of Fig. 4b.

The control unit 28 first brings the horizontal charging terminal unit 26 of the two charging terminal units 25, 26 into contact with the battery to search the charging information. When the charging information is not searched, the control unit 28 separates the horizontal charging unit 26 from the battery and then brings the vertical charging terminal unit 25 of the two charging terminal units 25, 26 into contact with the battery again to obtain the information required for the charging. Also, the control unit may first bring the vertical charging terminal unit 25 into contact with the battery to search the charging information. Then, when the charging information is not searched, the control unit may separate the vertical charging terminal unit 25 from the battery and then bring the horizontal charging terminal unit 26 of the two charging terminal units 25, 26 into contact with the battery again to obtain the information required for the charging.

Fig. 5 shows a single terminal of the charging terminal units. In order to lighten the impact in coming in contact with the metal terminals of the battery, the individual charging terminal 38 has an elastic member 52 built in, and in order to not only prevent the end portion of the charging terminal from being broken but also prevent the surface of the mounted battery from being damaged in coming in contact with the metal terminals of the battery, the end portion 51 of the charging terminal is rounded into a streamline shape. Furthermore, in order to improve a chance of success in contact with the metal terminals of the battery, it is preferable that the diameter of the end portion 51 of the charging terminal is minimized, and in the present embodiment, the diameter of the end portion 51 of the terminal is 1 mm or less.

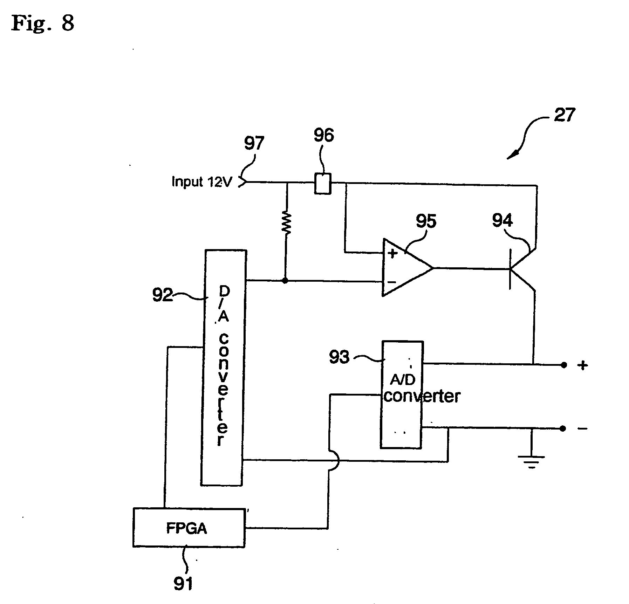

Fig. 8 shows a charging circuit 27 operable in conjunction with the control unit 28 of the charger for mobile phone according to the present invention and control procedures till charging the battery with the required voltage with respect to the voltage input into the charger of the present invention will be described with reference to the drawing.

First, from construction of the charging circuit 27 of the present invention, it can be seen that a rectifier circuit (not shown) for receiving external AC voltage and rectifying it into DC voltage of 12V to output it is basically provided in the charging circuit. Further, the charging circuit 27 of the present invention comprises an input terminal 97 for receiving the voltage of 12V output from the rectifier circuit and a resistor 96 through which the voltage input to the input terminal 97 passes.

Furthermore, the charging circuit of the present invention comprises a comparator 95 for comparing the voltage having passed through the resistor 96 with a voltage supplied from a digital-to-analog converter 92 and a transistor 94 for adjusting the output current supplied through the resistor 96 on the basis of the comparison output of the comparator 95. Accordingly, the transistor 94 controls amount of current flowing into the emitter terminal in accordance with the output value of the comparator 95.

Furthermore, the digital-to-analog converter 92 receives as a digital signal the signal supplied from the control unit 28 altogether controlling the charging circuit of the present invention and converts it into analog signal to output it. That is, in the charging circuit of the present invention, the digital-to-analog converter 92 receives the voltage signal supplied from the control unit 28 as a digital signal and converts it into analog signal to supply it to an inverted terminal (1) of the comparator 95. Therefore, the comparator 95 compares the voltage input to the input terminal 97 with a reference voltage that is the voltage supplied from the digital-to-analog converter 92 and then outputs a differential signal thereof.

Next, the control unit 28 determines amount of voltage required for the battery presently mounted in the charger by use of the terminals 38, 48 of the charging terminal units, supplies the determination signal to the digital-to-analog converter 92 through a bit line and receives a overload signal supplied from a analog-to-digital converter 93 to adjust the amount of voltage to be supplied to the digital-to-analog converter 92. Further, the control unit 28 identifies an anode and a cathode of the battery mounted in the charger by use of the charging terminals 38, 48, and allows the charging voltage to be supplied through the corresponding terminal of the charging terminals.

The analog-to-digital converter 93 detects amount of current to be output from the transistor 94 to monitor generation of overload, and serves for informing the control unit 28 of the generation of overload in the current supplied from the transistor 94.

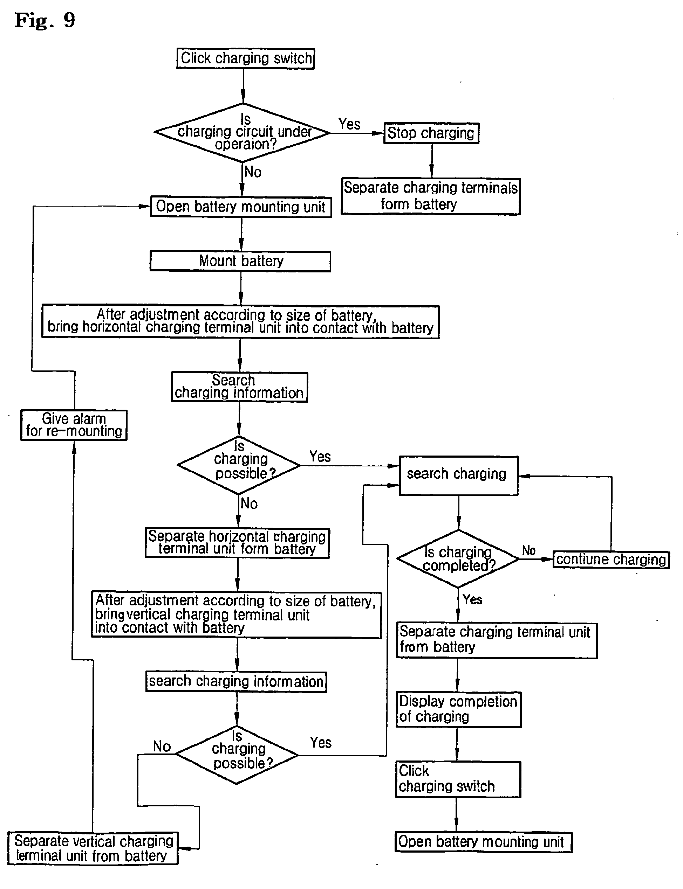

Fig. 9 is a flowchart illustrating the charging operations of the charger according to the present invention.

When a user clicks a charging switch 29, the charger according to the present invention determines whether the charging circuit 27 is being operated. If the charging circuit 27 is being operated, the charging operation is stopped, the terminals of the horizontal or vertical charging terminal unit 25, 26 is separated from the batter 30, and then the battery mounting unit 21 is opened. This operation can prevent damages to the charging terminal unit, which can be caused when the battery mounting unit 21 is opened directly without separation of the terminals of the charging terminal unit from the battery during operation of the charging circuit 27. Since when the charging circuit is not under operation, the charging terminal unit is separated from the battery, the battery mounting unit 21 is directly opened. If the battery mounting unit is opened, the battery is mounted. at that time, the battery is mounted at the center of the battery mounting unit 21 by means of the battery fixing unit 22 positioned on the battery mounting unit 21. When the battery is mounted on the battery mounting unit 21, the limit switches 37, 47 control the movement of the battery carrying portion in accordance with the size of the mounted battery to bring the battery into contact with the horizontal charging terminal unit. The contact of the metal terminals of the battery with the charging terminal unit may be manually executed. The control unit 28 of the charger searches information required for charging the battery by use of the terminals of the charging terminal unit in contact with the battery. Here, in order to accurately confirm positions of the metal terminal and the other materials of the battery, an optical sensor (not shown) may be employed. At the step of searching the charging information, when the charging information, that is, information relating to the anode, the cathode and the charging voltage of the battery is searched, the charging is started through the charging circuit 27. However, when no charging information is searched from the contacted terminals, the horizontal charging terminal unit should be separated from the battery and then be adjusted again correspondingly to the size of the battery to come in contact with the battery. The charging information is searched again by use of the contacted terminals. When the charging information is searched, the charging is started. Even in this case, when the charging information is not searched, the horizontal charging terminal unit is separated from the battery, the alarm for re-mounting is given, the battery mounting unit is opened to take out the battery, the battery is re-mounted and then the aforementioned steps should be repeated. When the charging of the battery is started, the control unit monitors whether the charging is completed, and when the charging has been completed, allows the contacted battery terminals to be separated from the battery and allows the charging completion to be displayed. Thereafter, when the charging switch is clicked, the battery mounting unit is opened to obtain the charged battery.

It is preferable that a user can see the charging state through a light emitting element (not shown) when the charger is charging or discharging.

At that time, when the charger according to the present invention is employed for the commercial purpose, operation of the charging switch 29 may be restricted by use of a locking unit (not shown). This is for the purpose of preventing persons other than the owner of the battery from taking the charged battery without permission.

As described above, the charger according to the present invention can charge all mobile phones and batteries regardless of manufacturers and models thereof.

Further, the present invention can facilitate contact of the charging terminal units with the battery, since the elastic portion is built in the battery mounting unit to be adjusted in accordance with sizes of various batteries.

Furthermore, it is possible to secure contact of the charging terminal unit with the battery by providing the elastic portion within the pin-shaped terminal, and it is also possible to prevent the pin-shaped terminal from getting bent or curved by use of the terminal protecting portion of the charging terminal unit.

Furthermore, since the plurality of charging terminals in contact with the battery are connected to the micro chip to search information required for the charging, it is possible to minimize production cost, volume and error of the charger, and since when the error occurs, inspection of the single micro chip enables the error to be detected, it is very efficient.

Furthermore, since the horizontal charging terminal and the vertical charging terminal come in contact with the battery at different times, accuracy, efficiency and stability in searching can be obtained.

### INDUSTRIAL APPLICABILITY

The present invention provides a charger for mobile phone, and more specifically a charger for mobile phone capable of charging all mobile phones or batteries regardless of manufacturers and models thereof.

## Claims

1. A charger for mobile phone, comprising:
a housing (20);
a battery mounting unit (21) configured to allow a battery (30) to be mounted into said housing (20);
a battery fixing unit (22) provided in said battery mounting unit (21), configured to locate said battery (30) at the center of said battery mounting unit (21);
a battery sensing unit (73) provided in said battery mounting unit (21), configured to sense that said battery (30) is mounted on said battery mounting unit (21);
two charging terminal units (25, 26) in horizontal and vertical directions, respectively, including a plurality of terminals (48, 38) coming in contact with metal terminals (31, 32) of said battery (30) configured to obtain a battery charging information;
limit switch units (37) provided in said charging terminal units, configured to adjust movement of said battery mounting unit (21) to bring said charging terminal units (25, 26) into contact with the metal terminals (31, 32) of said battery (30), in accordance with a size of said battery (30) to be mounted on said battery mounting unit (21);
wherein said charging terminal units (25, 26) include a terminal portion and a terminal protecting portion,
**characterized in that** the charger comprises
a control unit (28) connected to said charging terminal units (25, 26), configured to control contact of the metal terminals (31, 32) of said battery (30) with said charging terminal units and configured to search a charging information; and
a charging circuit unit (27) connected to said control unit (28), configured to supply said charging terminal units (25, 26) with a voltage using the charging information searched by said control unit to charge said battery (30),
wherein said control unit (28) is configured to first bring one of said two charging terminal units (25, 26) into contact with said battery (30) to search the charging information, and when the charging information is not obtained, said control unit (28) is configured to separate said one charging terminal unit from said battery (30) and then, in turn, is configured to bring the other of said two charging terminal units (25, 26) into contact with said battery (30) to search the charging information.

2. The charger for mobile phone according to claim 1, wherein the plurality of terminals (48, 38) of said charging terminal units (25, 26) have a pin shape.

3. The charger for mobile phone according to claim 4, wherein the plurality of terminals (48, 38) of said charging terminal units (25, 26) have an elastic portion provided therein.

4. The charger for mobile phone according to claim 5, wherein contact portions of the plurality of terminals (48, 38) of said charging terminal units (25, 26) have a streamline shape.

5. The charger for mobile phone according to claim 6, wherein each pitch of the plurality of terminals (48, 38) of said charging terminal units (25, 26) is smaller than a minimum width of the metal terminals (31, 32) of said battery (30) to be mounted.

6. The charger for mobile phone according to claim 2 or 3, wherein when the charging information is not obtained, said control unit separates the charging terminal unit (25, 26) from said mounted battery (30) and then allows said battery (30) to be re-mounted.

7. The charger for mobile phone according to claim 1, wherein said control unit (28) includes a micro chip.

8. The charger for mobile phone according to claim 1, wherein said battery mounting unit (21) includes a front portion (74), a battery carrying portion (78) and a connecting portion (76), and said connecting portion (76) is made of elastic material to be adjusted in accordance with the size of said battery (30).

9. The charger for mobile phone according to claim 1, further comprising a sensor unit for sensing the metal terminals (31, 32) of said battery (30) to be mounted on said battery mounting unit (21).

10. The charger for mobile phone according to claim 1, wherein contact of said charging terminal units (25, 26) with the metal terminals (31, 32) of said battery (30) mounted on said battery mounting unit (21) is executed manually.

## Patentansprüche

1. Ladegerät für ein Mobiltelefon umfassend:
- ein Gehäuse (29);
- eine Batteriemontageeinheit (21), die so konfiguriert ist, dass eine Batterie (30) in dem Gehäuse (20) montiert werden kann;
- eine Batteriebefestigungseinheit (22), die in der Batteriemontageeinheit (21) vorgesehen und so konfiguriert ist, dass sie die Batterie (30) an dem Zentrum der Batteriemontageeinheit (21) hält;
- eine Batteriesensoreinheit (74), die in der Batteriemontageeinheit (21) vorgesehen ist und so konfiguriert ist, dass sie abtastet, dass die Batterie (30) in der Batteriemontageeinheit (21) montiert ist;
- zwei Ladeanschlußeinheiten (25, 26) in horizontaler bzw. vertikaler Richtung, die eine Vielzahl von Anschlüssen (48, 38) aufweisen, die in Kontakt mit Metallanschlüssen (31, 32) der Batterie (30) kommen und so konfiguriert sind, dass sie eine Batterieladeinformation erhalten;
- Begrenzungsschaltereinheiten (37), die in den Ladeanschlußeinheiten vorgesehen und so konfiguriert sind, dass sie die Bewegung der Batteriemontageeinheit (21) einstellen, um die Ladeanschlußeinheiten (25, 26) entsprechend einer Größe der Batterie (30) in Kontakt mit den Metallanschlüßen (31, 32) der Batterie (30) zu bringen, die in der Batteriemontageeinheit (21) zu montieren ist;
wobei die Ladeanschlußeinheiten (25, 26) einen Anschlußabschnitt und einen Anschlußschutzabschnitt aufweisen, **dadurch gekennzeichnet, dass** das Ladegerät umfasst:
- eine Steuereinheit (28), die mit den Ladeanschlußeinheiten (25, 26) verbunden und so konfiguriert ist, dass sie den Kontakt der Metallanschlüße (31, 32) der Batterie (30) mit den Ladeanschlußeinheiten steuert, und die ferner so konfiguriert ist, dass sich eine Ladeinformation abfragt; und
- eine Ladeschaltungseinheit (27), die mit der Steuereinheit (28) verbunden und so konfiguriert ist, dass sie die Ladeanschlußeinheiten (25, 26) mit einer Spannung versorgt, wobei die Ladeinformation verwendet wird, die durch die Steuereinheit abgefragt wurde, um die Batterie (30) zu laden,
wobei die Steuereinheit (28) so konfiguriert ist, dass sie zuerst eine der zwei Ladeanschlußeinheiten (25, 26) in Kontakt mit der Batterie (30) bringt, um die Ladeinformation abzufragen, und dass, wenn die Ladeinformation nicht erhalten wird, die Steuereinheit (28) so konfiguriert ist, dass sie die eine Ladeanschlußeinheit von der Batterie (30) trennt und dann ihrerseits so konfiguriert ist, dass sie die andere der zwei Ladeanschlußeinheiten (25, 26) in Kontakt mit der Batterie (30) bringt, um die Ladeinformation abzufragen.

2. Ladegerät für ein Mobiltelefon nach Anspruch 1, worin die Vielzahl der Anschlüsse (48, 38) der Ladeanschlußeinheiten (25, 26) eine Stiftform haben.

3. Ladegerät für ein Mobiltelefon nach Anspruch 2, worin die Vielzahl der Anschlüsse (48, 38) der Ladeanschlußeinheiten (25, 26) einen elastischen Abschnitt darin umfassen.

4. Ladegerät für ein Mobiltelefon nach Anspruch 3, worin die Kontaktabschnitte der Vielzahl der Anschlüsse (48, 38) der Ladeanschlußeinheiten (25, 26) eine Stromlinienform haben.

5. Ladegerät für ein Mobiltelefon nach Anspruch 4, worin der Abstand der Vielzahl der Anschlüsse (48, 38) der Ladeanschlußeinheiten (25, 26) kleiner ist als die minimale Breite der Metallanschlüsse (31, 32) der Batterie (30), die montiert werden soll.

6. Ladegerät für ein Mobiltelefon nach Anspruch 2 oder 3, worin, wenn die Ladeinformation nicht erhalten wird, die Steuereinheit die Ladeanschlußeinheiten (25, 26) von der montierten Batterie (30) trennt und es dann gestattet, dass die Batterie (30) erneut montiert wird.

7. Ladegerät für ein Mobiltelefon nach Anspruch 1, worin die Steuereinheit (28) einen Mikrochip umfasst.

8. Ladegerät für ein Mobiltelefon nach Anspruch 1, worin die Batteriemontageeinheit (21) einen Frontabschnitt (64), einen Batterielagerabschnitt (78) und einen Verbindungsabschnitt (76) aufweist, und worin der Verbindungsabschnitt (76) aus einem elastischen Material hergestellt ist, das entsprechend der Größe der Batterie (30) eingestellt wird.

9. Ladegerät für ein Mobiltelefon nach Anspruch 1, ferner umfassend eine Sensoreinheit zum Abtasten der Metallanschlüsse (31, 32) der Batterie (30), die auf der Batteriemontageeinheit (21) montiert werden soll.

10. Ladegerät für ein Mobiltelefon nach Anspruch 1, worin der Kontakt der Ladeanschlußeinheiten (25, 26) mit den Metallanschlüssen (31, 32) der Batterie (30), die auf der Batteriemontageeinheit (21) montiert ist, von Hand ausgeführt wird.

## Revendications

1. Chargeur pour téléphone mobile, comprenant:
- un boîtier (20);
- une unité de montage de batterie (21) configurée pour permettre à une batterie (30) d'être montée dans ledit boîtier (20);
- une unité de fixation de batterie (22) pourvue dans ladite unité de montage de batterie (21), configurée pour fixer ladite batterie (30) au centre de ladite unité de montage de la batterie (21);
- une unité de détection de batterie (73) pourvue dans ladite unité de montage de la batterie (21), configurée pour saisir que ladite batterie (30) est montée dans ladite unité de montage de la batterie (21);
- deux unités de bornes de chargement (25, 26) dans les directions horizontale et verticale, respectivement, incluant une pluralité de bornes (48, 38) entrant en contact avec les bornes de métal (31, 32) de ladite batterie (30) configurée pour obtenir l'information de chargement de la batterie;
- des unités de commutateurs de limite (37) pourvues dans lesdites unités de bornes de chargement (25, 26), configurées pour ajuster le mouvement de ladite unité de montage de la batterie (21) pour amener lesdites unités de bornes de chargement (25, 26) en contact avec les bornes de métal (31, 32) de ladite batterie (30) conforme à une dimension de ladite batterie (30) pour être montée dans ladite unité de montage de la batterie (21);
- où lesdites unités de bornes de chargement (25, 26) comprennent une portion de bornes et une portion de protection de bornes,
**caractérisé en ce que** le chargeur comprend
- une unité de commande (28) connectée audites unités de bornes de chargement (25, 26) configurée pour commander le contact des bornes de métal (31, 32) de ladite batterie (30) avec lesdites unités de bornes de chargement et configurée pour chercher l'information de chargement; et
- une unité de circuits de chargement (27) connectée à ladite unité de commande (28) configurée pour alimenter lesdites unités de bornes de chargement (25, 26) avec une tension utilisant l'information de chargement cherchée par ladite unité de commande pour charger ladite batterie (30),
- ou ladite unité de commande (28) est configurée pour amener d'abord l'une desdites deux unités de bornes de chargement (25, 26) en contact avec ladite batterie (30) pour chercher l'information de chargement, et quand l'information de chargement n'est pas obtenue, ladite unité de commande (28) est configurée pour séparer ladite une unité de bornes de chargement de ladite batterie (30) et puis, à tour de rôle, est configurée pour amener l'autre desdites deux unités de bornes de chargement (25, 26) en contact avec ladite batterie (30) pour chercher l'information de chargement.

2. Chargeur pour téléphone mobile selon la revendication 1, où la pluralité de bornes (48, 38) desdites unités de bornes de chargement (25, 26) ont une forme de goupille.

3. Chargeur pour téléphone mobile selon la revendication 2, où la pluralité de bornes (48, 38) desdites unités de bornes de chargement (25, 26) ont une portion élastique pourvue là dedans.

4. Chargeur pour téléphone mobile selon la revendication 3, où les portions de contact de la pluralité de bornes (48, 38) desdites unités de bornes de chargement (25, 26) ont une forme pour les lignes de courant.

5. Chargeur pour téléphone mobile selon la revendication 4, où chaque pas de la pluralité de bornes (48, 38) desdites unités de bornes de chargement (25, 26) est plus petit qu'une largeur minime des bornes de métal (31, 32) de ladite batterie (30) pour être montée.

6. Chargeur pour téléphone mobile selon la revendication 2 ou 3, où quand l'information de chargement n'est pas obtenue, ladite unité de commande sépare l'unité de bornes de chargement (25, 26) de ladite batterie montée (30) et dans ce cas permet à ladite batterie (30) d'être ré-montée.

7. Chargeur pour téléphone mobile selon la revendication 1, où ladite unité de commande (28) comprend une micro puce.

8. Chargeur pour téléphone mobile selon la revendication 1, où ladite unité de montage de la batterie (21) comprend une portion frontale (74), une portion de souteneur de batterie (78) et une portion de connexion (76), et ladite portion de connexion (76) est faite d'un matériel élastique pour être ajustée conforme à la dimension de ladite batterie (30).

9. Chargeur pour téléphone mobile selon la revendication 1, comprenant de plus une unité à senseurs pour saisir les bornes de métal (31, 32) de ladite batterie (30) pour être montée dans ladite unité de montage de la batterie (21).

10. Chargeur pour téléphone mobile selon la revendication 1, où le contact desdites unités de bornes de chargement (25, 26) avec les bornes de métal (31, 32) de ladite batterie (30) montée dans ladite unité de montage de la batterie (21) est exécuté manuellement.
